# FASCICULE DE BREVET EUROPEEN

(11) **EP 4 257 428 B1**
(45) Date de publication et mention de la délivrance du brevet: **01.04.2026**
(21) Numéro de dépôt: 23158295.8
(22) Date de dépôt: 23.02.2023
(51) Int. Cl.: B60P 3/36

(54) **VEHICULE AUTOMOBILE HABITABLE A CINQ PLACES ASSISES A TABLE**
BEWOHNBARES KRAFTFAHRZEUG MIT FÜNF SITZPLÄTZEN MIT TISCHSITZEN
HABITABLE MOTOR VEHICLE WITH FIVE SITTING PLACES PROVIDED WITH A TABLE

(30) Priorité: 07.04.2022 FR 2203221
(43) Date de publication de la demande: 11.10.2023
(73) Titulaire: Trigano Van, 53037 San Gimignano (IT)
(72) Inventeur: CONTILLO, Fabio, 65123 Pescara (IT)
(74) Mandataire: Novagraaf Technologies

(56) Documents cités:
- DE-U1- 202006 013 033
- DE-U1- 202009 003 170
- DE-U1- 29 503 958
- US-A- 4 341 415

## Description

### Domaine technique de l'invention

L'invention concerne un véhicule automobile habitable aménagé dont l'aménagement intérieur est conçu pour servir de logement au cours d'un voyage ou de vacances.

On entend ainsi un véhicule à usage spécial dit de catégorie M1 conçu pour pouvoir servir de logement qui comporte un poste de conduite et dont la partie habitable comprend les équipements suivants : des sièges et une table, des couchettes pouvant être obtenues en convertissant les sièges, un coin cuisine, des espaces de rangement. Ces équipements doivent être inamovibles. Toutefois, la table peut être conçue pour être facilement escamotable.

Parmi ces véhicules, on distingue ceux dont la largeur maximale est égale à deux mètres dont font partie les « grands vans », «les vans aménagés» et les «mini vans ».

La principale différence entre un grand van aménagé et un mini van est que le grand van est plus long et est généralement doté d'un compartiment de toilettes et de douche.

### Arrière-plan technique

Selon une conception connue, un tel véhicule automobile habitable aménagé, d'orientation principale longitudinale correspondant à la direction de roulage, comporte :
- une partie avant dans laquelle est aménagé le poste de conduite du véhicule et qui est équipé de deux sièges avant dont chacun est apte à pivoter entre une position dite face à la route et une position pivotée dans laquelle il est orienté au moins en partie vers une partie arrière du véhicule ;
- et la partie arrière qui communique avec la partie avant, qui est délimitée transversalement par deux parois latérales, d'orientation longitudinale et verticale, et dans lequel sont agencés des équipements permettant de vivre à l'intérieur du véhicule dont au moins une table et deux places arrière permettant à un maximum de quatre personnes de s'asseoir à table, Lorsque le véhicule est arrêté, la table est notamment prévue pour permettre à des occupants de prendre un repas, assis autour de la table.

Les documents DE202006013033 U1 ou DE202009003170 U1 illustrent des exemples de tels aménagements.

L'invention vise à proposer une nouvelle conception enrichie de l'aménagement intérieur d'un tel véhicule permettant notamment à cinq personnes d'être assises simultanément à table, en occupant différentes places assises réparties autour de certaines parties du contour de la table, avec des orientations convertibles de l'orientation d'un occupant.

### Résumé de l'invention

L'invention propose un véhicule du type mentionné ci-dessus,
caractérisé en ce que :
- le contour de la table comporte :
   -- un premier bord latéral agencé en regard d'une première des deux parois latérales de la partie arrière avec laquelle le premier bord délimite un espace latéral dans lequel sont agencés une place latérale avant assise et une place latérale arrière assise adjacentes audit premier bord ;
   -- un second bord latéral opposé au premier bord latéral, le long duquel s'étend un couloir longitudinal ;
   -- un bord avant qui est agencé en regard des deux sièges avant en potion pivotée ;
   -- et un bord arrière qui est agencé en regard d'au moins une place transversale arrière assise qui est orientée vers l'avant du véhicule ,
   grâce à quoi, cinq personnes peuvent être assises simultanément à table, en occupant respectivement les deux sièges avant en position pivotée vers l'arrière, les deux places latérales assises avant et arrière, et ladite au moins une place transversale arrière assise,
   et caractérisé en ce qu'il comporte :
      -- un siège latéral arrière adjacent à ladite première paroi latérale qui appartient à la place latérale assise arrière et dont l'élément d'assise arrière est en appui sur une structure inférieure arrière de support qui est mobile entre une position escamotée et une position d'utilisation ;
      -- et un siège latéral avant adjacent à ladite première paroi latérale qui est convertible entre une configuration dans laquelle il offre ladite place latérale avant assise et une autre configuration dans laquelle il offre une place transversale avant assise, et dont l'élément d'assise est fixe et appartient soit à ladite place latérale avant assise, soit à ladite place transversale avant assise.

Selon d'autres caractéristiques de l'invention :
- le siège latéral avant comporte un élément de dossier avant qui est déplaçable entre ;
   -- une position d'orientation verticale et longitudinale dans laquelle, en coopération avec ledit élément d'assise avant fixe , il appartient à ladite place latérale avant assise ;
   -- et une position d'orientation verticale et transversale dans laquelle, en coopération avec ledit élément d'assise avant fixe, il appartient à ladite place transversale avant assise ;
- le siège latéral arrière et le siège latéral avant sont adjacents pour constituer une banquette latérale à deux places assises dont ladite place latérale assise arrière et ladite place latérale assise avant ;
- la structure inférieure arrière de support est mobile entre :
   -- une position horizontale d'utilisation dans laquelle l'élément d'assise arrière peut reposer sur la face supérieure d'une planche ;
   -- et une position escamotée dans laquelle l'élément d'assise arrière s'étend dans un plan vertical adjacent à ladite première paroi latérale .

Selon une autre caractéristique de l'invention, la table est une table convertible entre :
- un état permettant son utilisation simultanément par cinq personnes assises ;
- et un autre état dans lequel ses dimensions sont réduites et dont le contour comporte alors :
   -- un autre premier bord latéral agencé en regard de ladite première des deux parois latérales de la partie arrière ;
   -- un autre second bord latéral le long duquel s'étend ledit couloir longitudinal ;
   -- un autre bord avant qui est agencé en regard de ladite place latérale avant convertie en une place transversale avant assise qui est orientée vers l'arrière du véhicule ;
   -- et un autre bord arrière qui est agencé en regard d'au moins une place transversale arrière assise qui est orientée vers l'avant du véhicule,

Ainsi, au moins deux personnes peuvent être assises simultanément à table, en occupant ladite au moins une place transversale arrière assise et ladite place transversale avant assise.

Lorsque la table convertible est dans cet autre état dans lequel ses dimensions sont réduites, trois personnes peuvent être assises simultanément à table, en occupant deux places transversales arrière assises adjacentes agencées en regard dudit autre bord arrière et ladite place transversale avant assise.

Selon encore d'autres caractéristiques de l'invention :
- la table est de contour rectangulaire avec :
   -- un premier bord latéral long, d'orientation longitudinale, agencé en regard d'une première des deux parois latérales de la partie arrière avec laquelle ce premier bord long délimite un espace latéral dans lequel sont agencés une place latérale avant assise et une place latérale arrière assise adjacentes audit premier bord long ;
   -- un second bord latéral long opposé au premier bord latéral long, d'orientation longitudinale, le long duquel s'étend un couloir longitudinal ;
   -- un bord court avant d'orientation transversale, qui est agencé en regard des deux sièges avant en potion pivotée ;
   -- et un bord court arrière d'orientation transversale qui est agencé en regard d'au moins une place transversale arrière assise qui est orientée vers l'avant du véhicule ;
- dans ledit autre état de la table convertible dans lequel ses dimensions sont réduites, son contour rectangulaire comporte alors :
   -- un autre premier bord, d'orientation longitudinale, agencé le long de ladite première des deux parois latérales de la partie arrière ;
   -- un autre second bord, d'orientation longitudinale, le long duquel s'étend ledit couloir longitudinal ;
   -- un autre bord avant d'orientation transversale, qui est agencé en regard de ladite place latérale avant assise convertie en une place transversale avant assise qui est orientée vers l'arrière du véhicule ;
   -- et un autre bord arrière d'orientation transversale qui est agencé en regard d'au moins une place transversale arrière assise qui est orientée vers l'avant du véhicule ;
- lorsque la table convertible est dans ledit autre état dans lequel ses dimensions sont réduites, trois personnes peuvent être assises simultanément à table, en occupant deux places transversales arrière adjacentes agencées en regard dudit autre bord transversal arrière et ladite place transversale avant assise ;
- la table comporte un pied de table et un plateau rectangulaire constitué de deux moitiés dont :
   -- une première moitié qui est portée par l'extrémité supérieure du pied de table, et qui est montée mobile dans le plan horizontal par rapport à cette extrémité supérieure ;
   -- une seconde moitié qui est montée mobile par rapport à la première moitié entre une position déployée dans laquelle les deux moitiés constituent un plateau de grandes dimensions permettant à cinq personnes d'être assises simultanément à table ; et une position repliée dans laquelle les deux moitiés sont repliées l'une sur l'autre et constituent un plateau de dimensions réduites ;
- ladite première moitié du plateau est montée mobile transversalement dans le plan horizontal par rapport à l'extrémité supérieure du pied de table entre une position adjacente à ladite première paroi latérale et une position éloignée de ladite première paroi latérale, et est montée pivotante dans le plan horizontal par rapport à l'extrémité supérieure du pied de table entre deux positions angulaires distinctes décalées angulairement d'un quart de tour
- la seconde moitié du plateau est montée articulée par rapport à la première moitié autour d'un axe horizontal d'articulation ;
- ladite au moins une place transversale arrière assise appartient à une banquette transversale arrière, comportant deux places transversales arrière assises, qui est orientée vers l'avant du véhicule et qui s'étend depuis ladite première paroi latérale.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une représentation schématique simplifiée d'un véhicule selon l'invention selon un premier exemple de réalisation et dans un état permettant une utilisation de la table simultanément par cinq personnes ;
[Fig.2] - la figure 2 est une représentation analogue à celle de la figure 1 sur laquelle le véhicule selon le premier exemple de réalisation est dans un état permettant une utilisation de la table simultanément par deux ou trois personnes ;
[Fig.3] - la figure 3 est une représentation analogue à celle de la figure 1 d'un deuxième exemple de réalisation d'un véhicule selon l'invention permettant une utilisation de la table simultanément par cinq personnes ;
[Fig.4] - la figure 4 est une représentation analogue à celle de la figure 3 sur laquelle le véhicule selon le deuxième exemple de réalisation est dans un état permettant une utilisation de la table simultanément par deux ou trois personnes ;
[Fig.5] - la figure 5 est une représentation schématique partielle en perspective de la table et des différents sièges de la partie arrière du véhicule de la figure 3 ;
[Fig.6] - la figure 6 est une représentation schématique partielle en perspective de la table et des différents sièges de la partie arrière du véhicule de la figure 4 ;
[Fig.7] - la figure 7 est une vue analogue à celle de la figure 6 sur laquelle les différents composants de la table sont représentés de manière éclatée ;
[Fig.8] - la figure 8 est une vue analogue à celle de la figure 7 sur laquelle différents composants d'assise et de dossier de certains des sièges de la partie arrière et de la table sont représentés de manière éclatée ;
[Fig.9] - la figure 9 est une vue de détail analogue à celle de la figure 8 sur laquelle différents composants d'assise et de dossier de certains des sièges de la partie arrière sont représentés de manière éclatée et/ou en cours de conversion ;
[Fig.10] - la figure 10 est une vue analogue à celle de la figure 9 sur laquelle différents composants d'assise et de dossier de certains des sièges de la partie arrière sont représentés de manière éclatée et/ou dans une étape suivante de conversion ;
[Fig.11] - la figure 11 est une vue analogue à celle de la figure 10 sur laquelle différents composants d'assise et de dossier de certains des sièges de la partie arrière sont représentés de manière éclatée et/ou dans une étape suivante de conversion.

### Description détaillée de l'invention

Pour la description de l'invention et la compréhension des revendications, on adoptera à titre non limitatif les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant selon la direction de roulage du véhicule en marche avant et l'axe transversal est orienté de la gauche vers la droite en considérant l'orientation du conducteur en position assise de conduite sur le siège avant prévu à cet effet dans la partie avant.

### Premier exemple de réalisation

Dans la description qui va suivre, on définit une place assise comme étant une zone à l'intérieur du véhicule dans laquelle une personne peut occuper une position assise.

Une place assise peut être orientée longitudinalement vers l'avant ou bien vers l'arrière, ou bien être orientée transversalement vers la gauche ou vers la droite.

On définit un siège comme un ensemble structurel, comportant généralement un élément d'assise d'orientation horizontale et un dossier d'orientation globalement verticale, sur lequel une personne peut s'asseoir pour occuper une position assise déterminée.

On définit une banquette comme un ensemble structurel, comportant généralement un élément d'assise d'orientation horizontale et un dossier d'orientation globalement verticale, comportant au moins deux places assises. En d'autres termes une banquette est un siège particulier sur lequel au moins deux personnes peuvent s'asseoir en même temps, chacune dans une position assise prédéterminée.

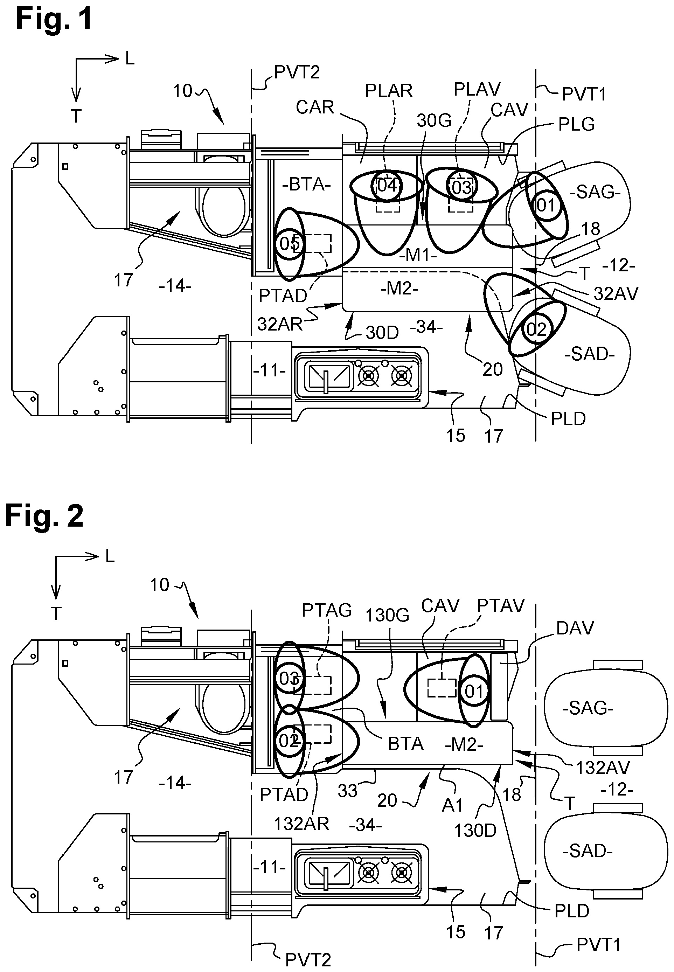

On a représenté schématiquement et partiellement aux figures 1 et 2 un véhicule automobile 10 habitable du type " grand van".

A titre non limitatif, le véhicule 10 est ici un véhicule dit à « conduite à gauche »

Le véhicule 10 comporte essentiellement deux parties avant 12, et arrière 14.

On a tracé un plan géométrique vertical et transversal PVT1 correspondant à la délimitation entre les deux parties 12 et 14.

La première partie avant 12 du véhicule 10 - non représentée en détails - constitue notamment le poste de conduite avec deux sièges avant gauche SAG et droit SAD, et la partie arrière 14 du véhicule 10 reçoit des composants et équipements permettant de vivre à l'intérieur du véhicule 10, parmi lesquels des éléments de rangement 11, une table T, des sièges offrant des places assises permettant de s'asseoir autour de la table T, un équipement de cuisine 15, et un bloc sanitaire 17.

La partie arrière 14 s'étend dans le prolongement de la partie avant 12. Cela permet notamment le passage de personnes d'une partie 12 à l'autre 14, ou inversement.

Chacun des deux sièges avant SAG, SAD du poste de conduite est un siège dit pivotant qui peut pivoter autour d'un axe vertical pour occuper :
- une position (Non représentée) principale dite face à la route dans laquelle l'occupant du siège est tourné vers le pare-brise et - s'agissant du siège de conduite - fait face au volant ;
- ou une position pivotée dans laquelle le siège est orienté au moins en partie vers la partie arrière 14 du véhicule.

Aux figures 1 et 2, chaque siège avant SAG, SAD a pivoté d'environ cent cinquante degrés d'angle par rapport à sa position face à la route, chacun dans un sens différent de manière telle qu'ils sont partiellement orientés l'un vers l'autre.

La partie arrière 14 est délimitée latéralement par deux parois verticales et longitudinales opposées de gauche PLG et de droite PLD.

Ces parois latérales se prolongent vers l'avant pour délimiter latéralement la partie avant 12 en comportant aussi deux portes latérales d'accès au poste de conduite.

L'encombrement transversal du véhicule 10 correspond globalement à la distance séparant transversalement les deux parois latérales PLG et PLD et il est inférieur ou égal à 2 mètres. La paroi latérale de droite PLD peut comporter une porte d'accès (Non représentée) qui permet d'accéder directement à l'intérieur de la partie arrière 14 par exemple ici dans la zone située à l'avant du bloc-cuisine 15.

Afin de permettre aux occupants de se déplacer à l'intérieur du véhicule, la portion avant de partie arrière 14 comporte un couloir longitudinal 34.

Latéralement à droite, le couloir longitudinal 34 s'étend en regard d'équipements tels que le bloc-cuisine 15 et des éléments de rangement11.

Latéralement à gauche, le couloir longitudinal 34 en regard d'un ensemble formant un salon 20 qui comprend essentiellement la table T et des sièges, selon différentes configurations qui seront expliquées par la suite, permettant d'offrir différentes places assises permettant différentes utilisations de la table T et du salon 20.

La zone formant salon 20 s'étend longitudinalement entre le plan géométrique vertical et transversal PVT1 et autre plan géométrique vertical et transversal PVT2, ces deux plans étant par exemple situés à environ 2 mètres l'un de l'autre.

La partie arrière 14 comporte un plancher principal 17 qui constitue notamment le plancher du couloir longitudinal 34.

Dans la zone formant salon 20, la partie arrière est délimitée par un plancher surélevé 18 qui est situé verticalement au niveau du plancher de la partie avant 12.

En regard du salon 20, le couloir longitudinal 34 est ainsi délimité en partie basse par une plinthe 33.

A titre d'exemple non limitatif, dans chacun de ses deux états représentés aux figures 1 et 2, la table T est de contour rectangulaire.

La table T comporte un pied de table (Non représenté aux figures 1 et 2) et un plateau rectangulaire horizontal constitué de deux moitiés M1 et M2.

Par exemple, la première moitié M1 est portée par l'extrémité supérieure du pied de table et la seconde moitié M2 est montée articulée par rapport à la première moitié M1 autour d'un axe horizontal central A1 d'articulation. Dans cet exemple de réalisation illustré aux figures 1 et 2, l'axe A1 est d'orientation longitudinale.

A la figure 1, la table rectangulaire T est dans une position dite déployée dans laquelle les deux moitiés M1+M2 constituent un plateau rectangulaire de grandes dimensions.

Son contour rectangulaire comporte un premier bord latéral long 30G, d'orientation longitudinale, agencé en regard de la paroi latérale de gauche PLG et un second bord latéral long 30D opposé au premier bord latéral long 30G le long duquel s'étend le couloir longitudinal 34.

Du fait du déploiement de la table T et de ses grandes dimensions, la second moitié M2 s'étend transversalement à l'intérieur de l'espace correspondant au couloir longitudinal 34 en en réduisant ainsi la largeur de passage.

Le contour rectangulaire de la table T comporte aussi un bord court avant 32AV d'orientation transversale qui est agencé en regard des deux sièges avant SAG, SAD représentés en potion pivotée, et un bord court arrière 32AR d'orientation transversale qui est orienté vers une banquette transversale arrière BTA agencée à l'arrière du salon 20.

Plus précisément, le bord court arrière 32AR est agencé en regard de la moitié de droite de la banquette BTA

A la figure 2, la table T est dans une position dite repliée dans laquelle la seconde moitié M2 est repliée sur la première moitié M1 pour constituer un plateau rectangulaire de dimensions réduites.

Son contour rectangulaire comporte alors un autre bord latéral long 130G, d'orientation longitudinale, agencé en regard de la paroi latérale de gauche PLG et un autre second bord latéral long 130D opposé au premier bord latéral long 130G le long duquel s'étend le couloir longitudinal 34.

Du fait du repliement de la table T transversalement vers l'intérieur en direction de la paroi latérale de gauche PLG et de ses dimensions réduites (Ici globalement de moitié selon la direction transversale), la table T ne s'étend pas transversalement à l'intérieur de l'espace correspondant au couloir longitudinal 34 qui offre sa plus grande largeur de passage.

Le contour rectangulaire de la table T comporte aussi un bord court avant 132AV d'orientation transversale agencé en regard des deux sièges avant SAG, SAD - et principalement en regard du siège avant gauche SAG - et un bord court arrière 132AR d'orientation transversale qui est orienté vers la banquette BTA et qui est agencé en regard de la moitié de droite de la banquette BTA.

Conformément aux enseignements de l'invention, la zone formant salon 20 est conçue pour permettre l'utilisation de la table T par cinq personnes assises simultanément autour de la table, par exemple pour y prendre un repas en commun.

Dans ce but, l'aménagement du salon 20 comporte deux places assises avant appartenant chacune à l'un des sièges avant SAG ou SAD en position pivotée, deux places latérales assises avant PLAV et arrière PLAR et une place transversale arrière assise PTAD appartenant ici à la banquette transversale BTA.

La personne occupant le siège avant gauche SAG fait face à la moitié de gauche du bord court avant 32AV, tandis que la personne occupant le siège avant droit SAD fait face à la moitié de droite du bord court avant 32AV.

Les deux places latérales PLAV et PLAR sont adjacentes et elles sont agencées le long de la paroi latérale de gauche PLG.

Il s'agit de deux places assises orientées transversalement vers l'intérieur. Ainsi, chaque occupant de l'une de ces deux places latérales avant PLAV ou arrière PLAR fait face à une moitié correspondante, avant ou arrière, du premier bord long de gauche 30G de la table T. Comme indiqué précédemment, la place transversale arrière assise appartenant à la banquette transversale BTA est ici la place de droite PTAD des deux places assises PTAG et PTAD que comporte la banquette BTA et la personne qui l'occupe fait face à la moitié de gauche du bord arrière court 32AR correspondant au bord transversal arrière de la moitié M1 du plateau de la table T.

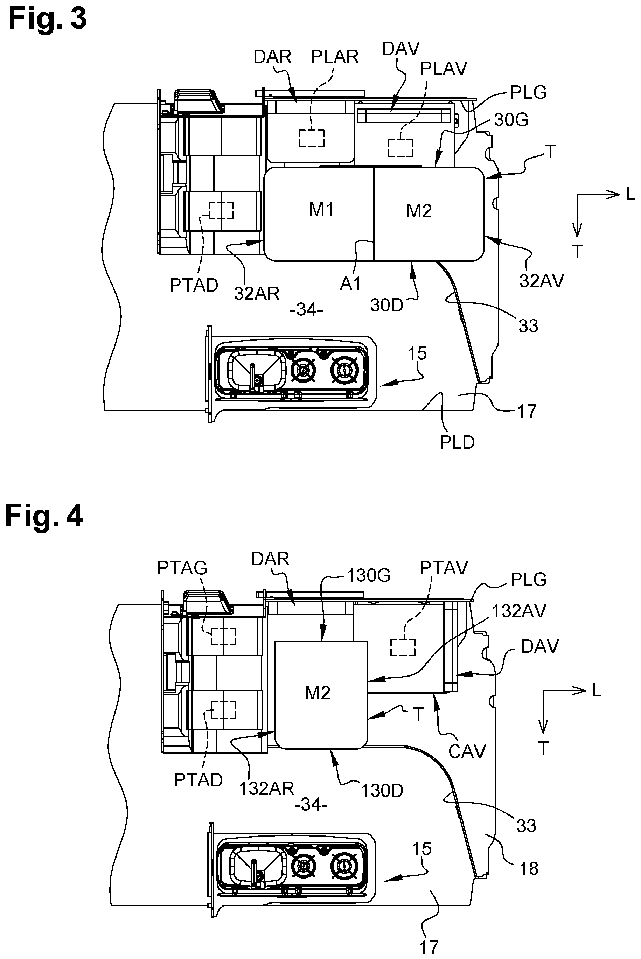

Comme cela sera expliqué plus en détails par la suite en référence à l'exemple de réalisation représenté aux figures 3 et suivantes, pour permettre d'agencer le salon 20 dans sa configuration représentée à la figure 2 :
- la place latérale assise arrière PLAR appartient à un siège latéral arrière adjacent à la paroi latérale de gauche PLG dont l'élément d'assise CAR est mobile entre une position d'utilisation et une position escamotée ;
- et la place latérale assise avant PLAV appartient au siège latéral avant dont l'élément d'assise CAV est ici fixe, et qui appartient soit à ladite place latérale avant assise PLAV, soit à la place transversale avant assise PTAR.

Le siège latéral avant est ainsi convertible entre une configuration d'utilisation associée à l'état d'utilisation du salon 20 représenté à la figure 1 dans laquelle il offre une place latérale avant assise PLAV, et une autre configuration d'utilisation associée à l'état d'utilisation du salon 20 représenté à la figure 2 dans laquelle il offre une place transversale avant assise PTAV.

La place latérale avant PLAV est orientée transversalement vers l'intérieur en direction du premier bord long de gauche 30G de la Table T, tandis que la place transversale avant assise PTAV est orientée longitudinalement vers l'arrière.

L'élément d'assise CAV du siège latéral avant est commun à l'une ou l'autre des deux configurations / orientations PLAV et PTAV, et il est ici fixe.

Dans la configuration d'utilisation associée à l'état d'utilisation du salon 20 représenté à la figure 1, les deux places latérales avant PLAV et arrière PLAR partagent un élément de dossier commun qui est fixe et d'orientation verticale et longitudinale dans laquelle il est adjacent à la paroi latérale de gauche.

Dans la configuration d'utilisation du salon 20 représenté à la figure 2, un élément de dossier avant DAV est en place dans une position d'orientation verticale et transversale dans laquelle, en coopération avec ledit élément d'assise fixe CAV, il s'étend depuis la paroi latérale de gauche PLG pour constituer le siège associé à ladite place transversale avant assise PTAV.

A la figure1, cinq personnes ou occupants O1 à O5 peuvent être assises simultanément à la table T, en occupant respectivement les deux sièges avant SAG-(O1) et SAD-(O2) en position pivotée vers l'arrière, les deux places latérales assises avant PLAV-(O3) et arrière PLAR-(O4), et la place transversale arrière assise PTAD-(O5).

A la figure 2, au moins deux personnes ou occupants O1' et O2' peuvent être assises simultanément à la table T, en occupant place transversale avant assise PTAV-(O1') et la place transversale arrière assise PTAD-(O2'). Il est aussi possible à une troisième personne O3' de s'asseoir à l'autre place transversale arrière assise PTAG-(O3') et la troisième personne O3' est alors assise en faisant longitudinalement en face de la première personne O1'.

Dans la configuration illustrée à la figure 2, le siège associé à ladite place transversale avant assise PTAV peut être occupé par un occupant O1 qui est orienté selon la direction générale longitudinale correspondant à la direction générale de déplacement du véhicule lors du roulage sur route.

Ce siège est ici orienté face vers l'arrière, l'occupant O1 « dos à la route ».

Ainsi, le siège convertible peut passer d'une configuration de siège, notamment prévue pour le roulage du véhicule de loisirs, dans laquelle l'élément de dossier DAV du siège transversal avant est dans une position d'orientation verticale et transversale dans laquelle est orthogonal à la paroi latérale de gauche PLG.

Dans la position illustrée à la figure 1 la configuration de banquette latérale est prévue pour une utilisation à l'arrêt du véhicule de loisirs.

### Second exemple de réalisation

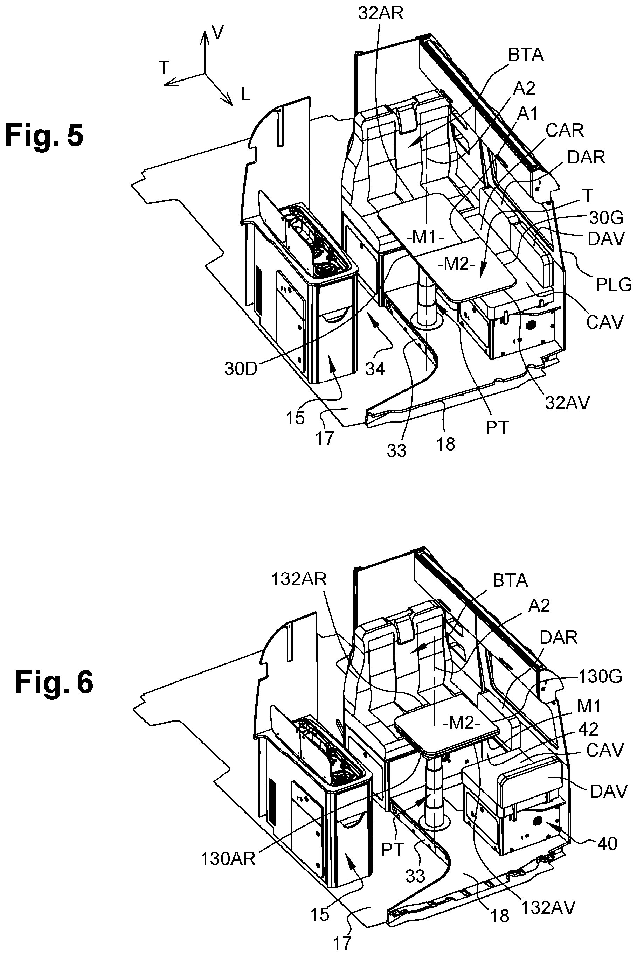

Dans le mode de réalisation illustrée aux figures 3 et 5, les deux configurations d'utilisation de la table T sont globalement identiques à celles décrites en référence aux figures 1 et 2 et permettent l'utilisation de la table T du salon 20 par cinq ou par trois personnes.

La table T comporte un pied de table PT qui est muni à son extrémité supérieure d'un support de plateau ST qui est apte à pivoter dans les deux sens autour de l'axe vertical du pied de table PT.

Le plateau de la table T est en deux moitiés dont la première moitié M1 est solidaire du support de plateau ST, et dont la seconde moitié M2 est montée pivotante par rapport à la première moitié M1, autour de l'axe horizontal de pivotement A1 qui, dans la configuration illustrée à la figure 5 est ici d'orientation transversale.

Ainsi, pour passer de la position déployée (Figure 5) dans laquelle les deux moitiés M1, M2 constituent un plateau de table de grandes dimensions permettant à cinq personnes d'être assises simultanément à table, à la position repliée (Figure 6) dans laquelle les deux moitiés M1, M2 sont repliées l'une sur l'autre et constituent un plateau de dimensions réduites permettant à deux ou trois personnes d'être assises simultanément à table, l'utilisateur replie d'abord la seconde partie M2 par-dessus la première moitié M1 en la faisant pivoter autour de l'axe A1, puis il fait ensuite tourner le support de plateau ST et les deux moitiés superposées M1 et M2 autour de l'axe vertical de pivotement A2, d'un quart de tour.

Le siège latéral avant comporte une structure inférieure avant de support 40, en forme de caisson parallélépipédique rectangle, qui est fixe et qui est adjacente à la paroi latérale de gauche PLG.

La structure inférieure avant de support 40 comporte une plaque ou planche horizontale 44 sur laquelle repose notamment l'élément avant d'assise CAV qui est fixe et qui est utilisé tant pour l'utilisation en place latérale avant PLAV, qu'en place transversale avant assise PTAV.

Le siège latéral avant comporte un élément de dossier avant DAV qui est déplaçable entre :
- une position d'orientation verticale et longitudinale (Voir figure 5) dans laquelle il constitue l'élément de dossier du siège latéral avant et dans laquelle il est adjacent à la paroi longitudinale de gauche PLG ;
- et une position d'orientation verticale et transversale (Voir Figure 6) dans laquelle il constitue l'élément de dossier du siège transversal avant et dans laquelle il est orthogonal à la paroi latérale de gauche PLG.

Le siège latéral arrière comporte une structure inférieure arrière de support 42 qui est mobile et qui est adjacente à la paroi latérale de gauche PLG.

La structure inférieure arrière de support 42 se présente sous la forme d'une planche rectangulaire dont l'un des bords est monté articulé le long de la paroi latérale de gauche PLG, autour d'un axe horizontal et longitudinal A3.

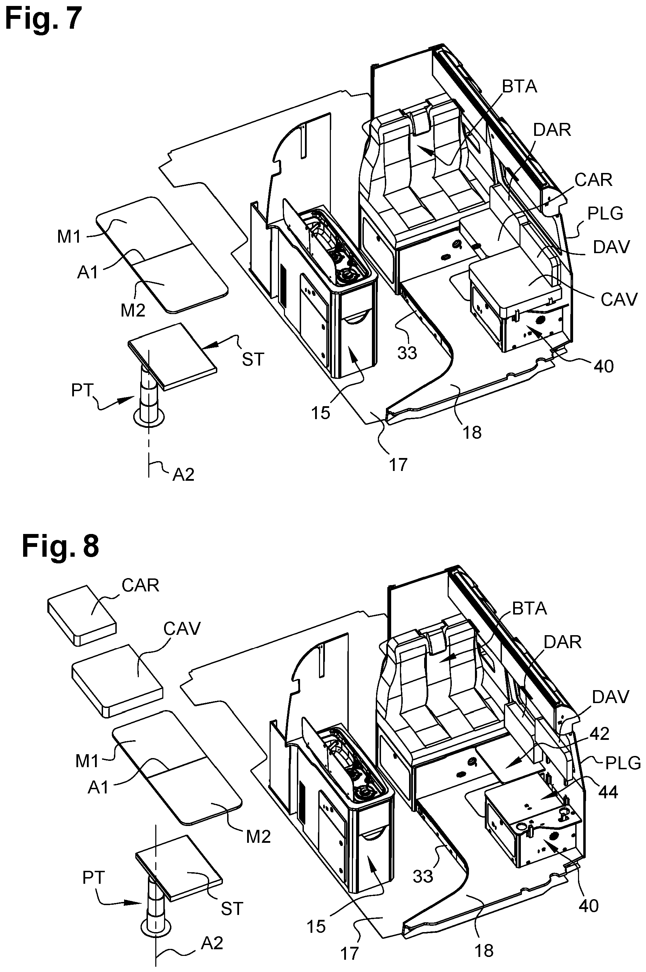

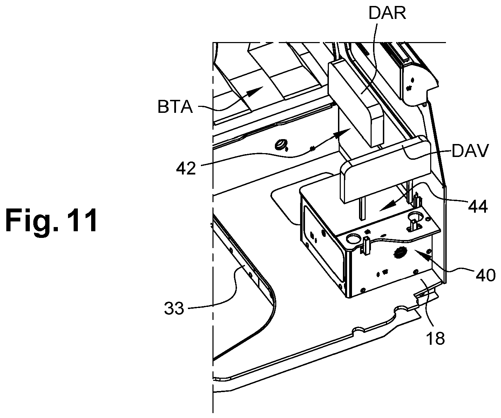

La structure inférieure arrière de support 42 est ainsi mobile entre :
- une position horizontale d'utilisation (Voir figure 8) dans laquelle l'élément d'assise arrière CAR peut reposer sur la face supérieure de la planche ;
- et une position escamotée (Voir figure 11) dans laquelle il s'étend dans un plan vertical adjacent à la paroi latérale de gauche PLG.

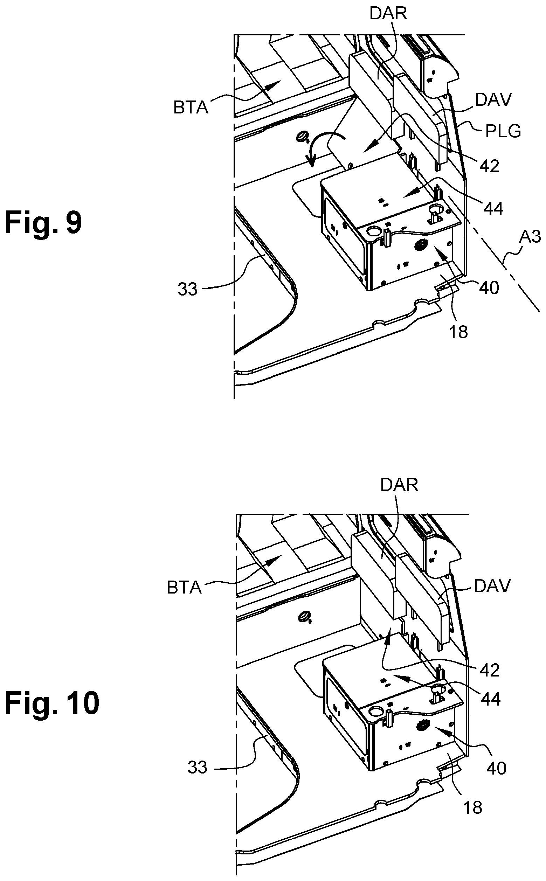

Après avoir replié le plateau et fait pivoter l'ensemble (Figure 6), l'utilisateur enlève l'élément d'assise arrière CAR et fait pivoter la structure inférieure arrière de support 42 pour l'escamoter (Figures 10 et 11).

Parallèlement, l'élément de dossier avant DAV est déplacé de sa position longitudinale (Figure 8) jusqu'à sa position verticale et transversale (Figure 11).

Le salon est alors dans la conformation illustrée à la figure 6 correspondant notamment au roulage du véhicule.

Comme on peut le voir notamment aux figures 8 à 11, à l'avant de la plaque ou planche horizontale 44 on a représenté un prolongement de cette plaque 44 qui comporte deux trous traversants circulaires espacés transversalement qui ont pour fonction de permettre la passage chacun d'une sangle appartenant à une ceinture de sécurité du type « lombaire (Non représentée).

Chaque sangle est fixée à l'intérieure du caisson 40 sur une armature (Non représentée) agencée à l'intérieur du caisson 40, qui est fixée au sol et qui est par est exemple réalisée en une structure de tubes soudés.

Ainsi, dans sa configuration de siège (Figure 6), notamment prévue pour le roulage du véhicule de loisirs, le siège transversal avant est équipé d'une ceinture de sécurité répondant aux obligations réglementaires en la matière.

## Revendications

1. Véhicule (10) automobile habitable d'orientation principale longitudinale, comportant :
- une partie avant (12) dans laquelle est aménagé le poste de conduite du véhicule et qui est équipé de deux sièges avant (SAG, SAD) dont chacun est apte à pivoter entre une position dite face à la route et une position pivotée dans laquelle il est orienté au moins en partie vers une partie arrière (14) du véhicule ;
- la partie arrière (14) qui communique avec la partie avant (12), qui est délimitée transversalement par deux parois latérales (PLG, PLD), d'orientation longitudinale et verticale, et dans lequel sont agencés des composants permettant de vivre à l'intérieur du véhicule dont au moins une table (T) et des places arrière permettant de s'asseoir à table,
- le contour de la table (T) comportant :
-- un premier bord latéral (30G) agencé en regard d'une première des deux parois latérales (PLG, PLD) de la partie arrière (14) avec laquelle le premier bord latéral (30G) délimite un espace latéral dans lequel sont agencés une place latérale avant assise (PLAV) et une place latérale arrière assise (PLAR) adjacentes audit premier bord latéral (30G) ;
-- un second bord latéral (30D) opposé au premier bord latéral (30G), le long duquel s'étend un couloir longitudinal (34) ;
-- un bord avant (32AV) qui est agencé en regard des deux sièges avant (SAG, SAD) en position pivotée ;
-- et un bord arrière (32AR) qui est agencé en regard d'au moins une place transversale arrière assise (PTAD) qui est orientée vers l'avant du véhicule,
grâce à quoi cinq personnes (01-05) peuvent être assises simultanément à table, en occupant respectivement les deux sièges avant (SAG, SAD) en position pivotée vers l'arrière, les deux places latérales assises avant et arrière (PLAV, PLAD), et ladite au moins une place transversale arrière assise (PTAD),
et **caractérisé en ce qu'**il comporte :
-- un siège latéral arrière adjacent à ladite première paroi latérale (PLG) qui appartient à la place latérale assise arrière (PLAR) et dont l'élément d'assise arrière (CAR) est en appui sur une structure inférieure arrière de support (42) qui est mobile entre une position escamotée et une position d'utilisation ;
-- et un siège latéral avant adjacent à ladite première paroi latérale (PLG) qui est convertible entre une configuration dans laquelle il offre ladite place latérale avant assise (PLAV) et une autre configuration dans laquelle il offre une place transversale avant assise (PTAV), et dont l'élément d'assise (CAV) est fixe et appartient soit à ladite place latérale avant assise (PLAV), soit à ladite place transversale avant assise (PTAV).

2. Véhicule (10) selon la revendications précédente, **caractérisé en ce que** le siège latéral avant comporte un élément de dossier avant (DAV) qui est déplaçable entre :
- une position d'orientation verticale et longitudinale dans laquelle, en coopération avec ledit élément d'assise avant fixe (CAV), il appartient à ladite place latérale avant assise (PLAV) ;
- et une position d'orientation verticale et transversale dans laquelle, en coopération avec ledit élément d'assise avant fixe (CAV), il appartient à ladite place transversale avant assise (PTAV).

3. Véhicule (10) selon la revendication 1 ou 2, **caractérisé en ce que** le siège latéral arrière et le siège latéral avant sont adjacents pour constituer une banquette latérale à deux places assises (PLAR, PLAV) dont ladite place latérale assise arrière (PLAR) et ladite place latérale assise avant (PLAV).

4. Véhicule selon la revendication 1, **caractérisé en ce que** la structure inférieure arrière de support (42) est mobile entre :
- une position horizontale d'utilisation dans laquelle l'élément d'assise arrière (CAR) peut reposer sur la face supérieure d'une planche ;
- et une position escamotée dans laquelle l'élément d'assise arrière (CAR) s'étend dans un plan vertical adjacent à ladite première paroi latérale (PLG).

5. Véhicule (10) selon l'une quelconque des revendications précédentes, **caractérisé en ce que** la table (T) est une table convertible entre :
- un état permettant son utilisation simultanément par cinq personnes assises (O1-O5) ;
- et un autre état dans lequel ses dimensions sont réduites et dont le contour comporte alors :
-- un autre premier bord latéral (130G) agencé en regard de ladite première (PLG) des deux parois latérales (PLG, PLD) de la partie arrière (14) ;
- un autre second bord latéral (130D) le long duquel s'étend ledit couloir longitudinal (34) ;
-- un autre bord avant (132AV) qui est agencé en regard de ladite place latérale avant convertie en une place transversale avant (PTAV) assise qui est orientée vers l'arrière du véhicule ;
-- et un autre bord arrière (132AR) qui est agencé en regard d'au moins une place transversale arrière assise (PTAD) qui est orientée vers l'avant du véhicule, grâce à quoi au moins deux personnes (O2', O1') peuvent être assises simultanément à table, en occupant ladite au moins une place transversale arrière assise (PTAD) et ladite place transversale avant assise (PTAV).

6. Véhicule (10) selon la revendication 5, **caractérisé en ce que** lorsque la table (T) convertible est dans ledit autre état dans lequel ses dimensions sont réduites, trois personnes (O1'-O3') peuvent être assises simultanément à table, en occupant deux places transversales arrière assises adjacentes (PTAD, PTAG) agencées en regard dudit autre bord arrière (132AR) et ladite place transversale avant assise (PTAV).

7. Véhicule (10) selon l'une des revendications 1 à 6,
**caractérisé en ce que** :
- la table (T) est de contour rectangulaire avec :
-- un premier bord latéral long (30G), d'orientation longitudinale, agencé en regard d'une première (PLG) des deux parois latérales (PLG, PLD) de la partie arrière (14) avec laquelle (PLG) ce premier bord long (30G) délimite un espace latéral dans lequel sont agencés une place latérale avant assise (PLAV) et une place latérale arrière assise (PLAR) adjacentes audit premier bord long (30G) ;
-- un second bord latéral long (30D) opposé au premier bord latéral long (30G), d'orientation longitudinale, le long duquel (30D) s'étend un couloir longitudinal (34) ;
-- un bord court avant (32AV) d'orientation transversale, qui est agencé en regard des deux sièges avant (SAG, SAD) en potion pivotée ;
-- et un bord court arrière (32AR) d'orientation transversale qui est agencé en regard d'au moins une place transversale arrière assise (PTAD) qui est orientée vers l'avant du véhicule.

8. Véhicule (10) selon la revendication 7 prise en combinaison avec l'une des revendications 5 ou 6, **caractérisé en ce que** dans ledit autre état de la table (T) convertible dans lequel ses dimensions sont réduites, son contour rectangulaire comporte alors :
-- un autre premier bord (130G), d'orientation longitudinale, agencé le long de ladite première (PLG) des deux parois latérales (PLG, PLD) de la partie arrière (14) ;
-- un autre second bord (130D), d'orientation longitudinale, le long duquel (130D) s'étend ledit couloir longitudinal (34) ;
-- un autre bord avant (132AV) d'orientation transversale, qui est agencé en regard de ladite place latérale avant assise convertie en une place transversale avant assise (PTAV) qui est orientée vers l'arrière du véhicule ;
-- et un autre bord arrière (132AR) d'orientation transversale qui est agencé en regard d'au moins une place transversale arrière assise (PTAD, PTAG) qui est orientée vers l'avant du véhicule.

9. Véhicule (10) selon la revendication 8, **caractérisé en ce que** lorsque la table (T) convertible est dans ledit autre état dans lequel ses dimensions sont réduites, trois personnes (O1'-O3') peuvent être assises simultanément à table, en occupant deux places transversales arrière adjacentes (PTAG, PTAD) agencées en regard dudit autre bord transversal arrière (132AR) et ladite place transversale avant assise (PTAV).

10. Véhicule (10) selon l'une quelconque des revendications précédentes, **caractérisé en ce que** la table (T) comporte un pied de table (PT) et un plateau rectangulaire constitué de deux moitiés (M1, M2) dont :
- une première moitié (M1) qui est portée par l'extrémité supérieure du pied de table, (PT) et qui est montée mobile dans le plan horizontal par rapport à cette extrémité supérieure ;
- une seconde moitié (M2) qui est montée mobile par rapport à la première moitié (M1) entre :
-- une position déployée dans laquelle les deux moitiés (M1, M2) constituent un plateau de grandes dimensions permettant à cinq personnes (01-05) d'être assises simultanément à table ;
-- et une position repliée dans laquelle les deux moitiés (M1, M2) sont repliées l'une sur l'autre et constituent un plateau de dimensions réduites.

11. Véhicule (10) selon la revendication précédente, **caractérisé en ce que** ladite première moitié (M1) du plateau est montée mobile transversalement dans le plan horizontal par rapport à l'extrémité supérieure du pied de table (PT) entre une position adjacente à ladite première paroi latérale (PLG) et une position éloignée de ladite première paroi latérale (PLG), et est montée pivotante dans le plan horizontal par rapport à l'extrémité supérieure du pied de table (PT) entre deux positions angulaires distinctes décalées angulairement d'un quart de tour.

12. Véhicule (10) selon l'une des revendications 10 ou 11, **caractérisé en ce que** la seconde moitié (M2) du plateau est montée articulée par rapport à la première moitié (M1) autour d'un axe horizontal d'articulation.

13. Véhicule (10) selon l'une quelconque des revendications précédentes, **caractérisé en ce que** ladite au moins une place transversale arrière assise (PTAG, PTAD) appartient à une banquette transversale arrière (BTA) comportant deux places transversales arrière assises (PTAG, PTAD) qui est orientée vers l'avant du véhicule et qui s'étend depuis ladite première paroi latérale (PLG).

## Patentansprüche

1. Bewohnbares Kraftfahrzeug (10) mit vorwiegend longitudinaler Ausrichtung, umfassend:
- einen vorderen Teil (12), in dem sich der Fahrerplatz des Fahrzeugs befindet und der mit zwei Vordersitzen (SAG, SAD) ausgestattet ist, von denen jeder zwischen einer zur Straße gerichteten Position und einer gedrehten Position, in der er zumindest teilweise zu einem hinteren Teil (14) des Fahrzeugs ausgerichtet ist, schwenkbar ist;
- den hinteren Teil (14), der mit dem vorderen Teil (12) verbunden ist, der quer durch zwei seitliche Wände (PLG, PLD) mit Längs- und Vertikalausrichtung begrenzt ist und in dem Komponenten angeordnet sind, die das Leben im Inneren des Fahrzeugs ermöglichen, darunter mindestens ein Tisch (T) und hintere Plätze, an denen man am Tisch sitzen kann,
- wobei die Kontur des Tisches (T) umfasst:
-- eine erste Seitenkante (30G), die gegenüber einer ersten der beiden Seitenwände (PLG, PLD) des hinteren Teils (14), mit der die erste Seitenkante (30G) einen seitlichen Raum begrenzt, in dem ein vorderer seitlicher Sitzplatz (PLAV) und ein hinterer seitlicher Sitzplatz (PLAR) neben der ersten Seitenkante (30G) angeordnet sind;
-- eine zweite Seitenkante (30D) gegenüber der ersten Seitenkante (30G), entlang der sich ein Längsgang (34) erstreckt;
-- eine Vorderkante (32AV), die gegenüber den beiden vorderen Sitzen (SAG, SAD) in gedrehter Position angeordnet ist;
-- und eine hintere Kante (32AR), die gegenüber mindestens einem hinteren quer Sitzplatz (PTAD) angeordnet ist, der zur Vorderseite des Fahrzeugs ausgerichtet ist, wodurch fünf Personen (01-05) gleichzeitig am Tisch sitzen können, indem sie jeweils die beiden nach hinten geschwenkten Vordersitze (SAG, SAD), die beiden seitlichen Vorder- und Rücksitze (PLAV, PLAD) und den mindestens einen hinteren quer Sitz (PTAD) einnehmen,
und **dadurch gekennzeichnet ist, dass** es umfasst:
-- einen hinteren Seitensitz neben der ersten Seitenwand (PLG), der zum hinteren Seitensitzplatz (PLAR) gehört und dessen hinteres Sitzelement (CAR) auf einer hinteren unteren Stützstruktur (42) aufliegt, die zwischen einer versenkten Position und einer Gebrauchsposition beweglich ist;
-- und einen vorderen Seitensitz neben der ersten Seitenwand (PLG), der zwischen einer Konfiguration, in der er den vorderen Seitensitzplatz (PLAV) bildet, und einer anderen Konfiguration, in der er einen vorderen quer Sitzplatz (PTAV) bildet, umgebaut werden kann und dessen Sitz teil (CAV) feststehend ist und entweder zum vorderen Seitensitzplatz (PLAV) (PLAV) oder zu dem vorderen quer gerichteten Sitzplatz (PTAV) gehört.

2. Fahrzeug (10) gemäß den vorstehenden Ansprüchen, **dadurch gekennzeichnet, dass** der vordere Seitensitz ein vorderes Rückenelement (DAV) umfasst, das zwischen folgenden Positionen verschiebbar ist:
- einer vertikalen und longitudinalen Ausrichtung, in der es in Zusammenarbeit mit dem festen vorderen Sitzelement (CAV) zum vorderen seitlichen Sitzplatz (PLAV) gehört;
- und einer vertikalen und quer gerichteten Position, in der es in Zusammenarbeit mit dem festen vorderen Sitzelement (CAV) zum vorderen quer Sitzplatz (PTAV) gehört.

3. Fahrzeug (10) nach Anspruch 1 oder 2, **dadurch gekennzeichnet, dass** der hintere Seitensitz und der vordere Seitensitz nebeneinander liegen, um eine Seitensitzbank mit zwei Sitzplätzen (PLAR, PLAV) zu bilden, deren hinterer Seitensitzplatz (PLAR) und deren vorderer Seitensitzplatz (PLAV).

4. Fahrzeug gemäß Anspruch 1, **dadurch gekennzeichnet, dass** die hintere untere Stützstruktur (42) beweglich ist zwischen:
- einer horizontalen Gebrauchsposition, in der das hintere Sitzelement (CAR) auf der Oberseite einer Platte aufliegen kann;
- und einer versenkten Position, in der sich das hintere Sitzelement (CAR) in einer vertikalen Ebene neben der ersten Seitenwand (PLG) erstreckt.

5. Fahrzeug (10) nach einem der vorstehenden Ansprüche, **dadurch gekennzeichnet, dass** der Tisch (T) zwischen folgenden Zuständen umwandelbar ist:
- einem Zustand, in dem er von fünf sitzenden Personen (01-05) gleichzeitig genutzt werden kann;
- und einem anderen Zustand, in dem seine Abmessungen reduziert sind und dessen Umriss dann Folgendes umfasst:
-- einer weiteren ersten Seitenkante (130G), die gegenüber der ersten (PLG) der beiden Seitenwände (PLG, PLD) des hinteren Teils (14) angeordnet ist;
- einer weiteren zweiten Seitenkante (130D), entlang der sich der Längsgang (34) erstreckt;
-- eine weitere Vorderkante (132AV), die gegenüber dem in einen nach hinten gerichteten vorderen quer Sitzplatz (PTAV) umgewandelten vorderen Seitensitzplatz angeordnet ist;
-- und eine weitere hintere Kante (132AR), die gegenüber mindestens einem hinteren quer Platz (PTAD) angeordnet ist, der zur Vorderseite des Fahrzeugs ausgerichtet ist,
wodurch mindestens zwei Personen (O2', O1') gleichzeitig am Tisch sitzen können, indem sie den mindestens einen hinteren quer Platz (PTAD) und den vorderen quer Platz (PTAV) einnehmen.

6. Fahrzeug (10) nach Anspruch 5, **dadurch gekennzeichnet, dass**, wenn sich der umbaubare Tisch (T) in dem anderen Zustand befindet, in dem seine Abmessungen reduziert sind, drei Personen (O1'-O3') gleichzeitig am Tisch sitzen können, indem sie zwei benachbarte hintere quer Sitze (PTAD, PTAG), die gegenüber der anderen Hinterkante (132AR) angeordnet sind, und den vorderen quer Sitzplatz (PTAV) einnehmen.

7. Fahrzeug (10) gemäß einem der Ansprüche 1 bis 6,
**dadurch gekennzeichnet, dass**:
- der Tisch (T) einen rechteckigen Umriss aufweist mit:
-- einer ersten langen Seitenkante (30G) in Längsrichtung, die gegenüber einer ersten (PLG) der beiden Seitenwände (PLG, PLD) des hinteren Teils (14) angeordnet ist, mit der (PLG) diese erste lange Kante (30G) einen seitlichen Raum begrenzt, in dem ein vorderer seitlicher Sitzplatz (PLAV) und ein hinterer seitlicher Sitzplatz (PLAR) neben der ersten langen Kante (30G) angeordnet sind;
-- eine zweite Längsseitenkante (30D) gegenüber der ersten Längsseitenkante (30G) mit Längsausrichtung, entlang der sich ein Längsgang (34) erstreckt;
-- eine kurze Vorderkante (32AV) mit quer Ausrichtung, die gegenüber den beiden vorderen Sitzen (SAG, SAD) in einer schwenkbaren Position angeordnet ist;
-- und eine kurze hintere Kante (32AR) mit quer Ausrichtung, die gegenüber mindestens einem hinteren quer Sitzplatz (PTAD) angeordnet ist, der zur Vorderseite des Fahrzeugs ausgerichtet ist.

8. Fahrzeug (10) nach Anspruch 7 in Kombination mit einem der Ansprüche 5 oder 6, **dadurch gekennzeichnet, dass** in dem anderen Zustand des umbaubaren Tisches (T), in dem seine Abmessungen reduziert sind, sein rechteckiger Umriss dann umfasst:
-- eine weitere erste Kante (130G) in Längsrichtung, die entlang der ersten (PLG) der beiden Seitenwände (PLG, PLD) des hinteren Teils (14) angeordnet ist;
-- eine weitere zweite Kante (130D) in Längsrichtung, entlang der sich der Längskorridor (34) erstreckt;
-- eine weitere vordere Kante (132AV) in quer Richtung, die gegenüber dem vorderen seitlichen Sitzplatz angeordnet ist, der in einen vorderen quer Sitzplatz (PTAV) umgewandelt wurde, der zum Heck des Fahrzeugs ausgerichtet ist;
-- und eine weitere quer Kante (132AR), die gegenüber mindestens einem hinteren quer Sitzplatz (PTAD, PTAG) angeordnet ist, der zur Vorderseite des Fahrzeugs ausgerichtet ist.

9. Fahrzeug (10) nach Anspruch 8, **dadurch gekennzeichnet, dass**, wenn sich der umbaubare Tisch (T) in dem anderen Zustand befindet, in dem seine Abmessungen reduziert sind, drei Personen (O1'-O3') gleichzeitig am Tisch sitzen können, indem sie zwei benachbarte hintere quer Plätze (PTAG, PTAD), die gegenüber der anderen hinteren quer Kante (132AR) angeordnet sind, und den vorderen quer Platz (PTAV) einnehmen.

10. Fahrzeug (10) gemäß einem der vorstehenden Ansprüche, **dadurch gekennzeichnet, dass** der Tisch (T) ein Tischbein (PT) und eine rechteckige Tischplatte umfasst, die aus zwei Hälften (M1, M2) besteht, von denen:
- eine erste Hälfte (M1), die vom oberen Ende des Tischbeins (PT) getragen wird und in der horizontalen Ebene relativ zu diesem oberen Ende beweglich angebracht ist;
- eine zweite Hälfte (M2), die relativ zur ersten Hälfte (M1) beweglich zwischen folgenden Positionen angebracht ist:
-- einer ausgefahrenen Position, in der die beiden Hälften (M1, M2) eine große Tischplatte bilden, an der fünf Personen (01-05) gleichzeitig Platz nehmen können;
-- und einer zusammengeklappten Position, in der die beiden Hälften (M1, M2) aufeinander geklappt sind und eine Tischplatte mit reduzierten Abmessungen bilden.

11. Fahrzeug (10) gemäß dem vorherigen Anspruch, **dadurch gekennzeichnet, dass** die erste Hälfte (M1) der Tischplatte in der horizontalen Ebene in Bezug auf das obere Ende des Tischbeins (PT) zwischen einer Position neben der ersten Seitenwand (PLG) und einer Position entfernt von der ersten Seitenwand (PLG) beweglich angebracht ist und in der horizontalen Ebene relativ zum oberen Ende des Tischbeins (PT) zwischen zwei unterschiedlichen Winkelpositionen, die um eine Vierteldrehung versetzt sind, schwenkbar angebracht ist.

12. Fahrzeug (10) nach einem der Ansprüche 10 oder 11, **dadurch gekennzeichnet, dass** die zweite Hälfte (M2) der Platte in Bezug auf die erste Hälfte (M1) um eine horizontale Gelenkachse gelenkig angebracht ist.

13. Fahrzeug (10) nach einem der vorstehenden Ansprüche, **dadurch gekennzeichnet, dass** der mindestens eine hintere quer Sitzplatz (PTAG, PTAD) zu einer hinteren quer Bank (BTA) mit zwei hinteren quer Sitzen (PTAG, PTAD) gehört, die zur Vorderseite des Fahrzeugs ausgerichtet ist und sich von der ersten Seitenwand (PLG) aus erstreckt.

## Claims

1. Motor vehicle (10) with a main longitudinal orientation, comprising:
- a front section (12) in which the vehicle's driver's seat is located and which is equipped with two front seats (SAG, SAD), each of which is capable of pivoting between a position facing the road and a pivoted position in which it is oriented at least partially towards a rear section (14) of the vehicle;
- the rear section (14) which communicates with the front section (12), which is delimited transversely by two side walls (PLG, PLD), oriented longitudinally and vertically, and in which are arranged components enabling people to live inside the vehicle, including at least one table (T) and rear seats enabling people to sit at the table,
- the outline of the table (T) comprising:
-- a first side edge (30G) arranged opposite a first of the two side walls (PLG, PLD) of the rear section (14), with which the first side edge (30G) delimits a side space in which a front side seating position (PLAV) and a rear side seating position (PLAR) adjacent to said first side edge (30G) are arranged;
-- a second side edge (30D) opposite the first side edge (30G), along which a longitudinal aisle (34) extends;
-- a front edge (32AV) which is arranged opposite the two front seats (SAG, SAD) in the pivoted position;
-- and a rear edge (32AR) which is arranged opposite at least one rear transverse seating position (PTAD) which faces the front of the vehicle,
whereby five persons (01-05) can be seated simultaneously at the table, occupying respectively the two front seats (SAG, SAD) in the rearward pivoted position, the two front and rear side seats (PLAV, PLAD), and said at least one rear transverse seat (PTAD),
and **characterised in that** it comprises:
-- a rear side seat adjacent to said first side wall (PLG) which belongs to the rear side seating position (PLAR) and whose rear seat element (CAR) rests on a rear lower support structure (42) which is movable between a retracted position and a position of use;
-- and a front side seat adjacent to said first side wall (PLG) which is convertible between a configuration in which it provides said front side seating position (PLAV) and another configuration in which it provides a front transverse seating position (PTAV), and whose seat element (CAV) is fixed and belongs either to said front side seating position (PLAV) (PLAV) or to said front transverse seating position (PTAV).

2. Vehicle (10) according to the preceding claim, **characterised in that** the front side seat comprises a front backrest element (DAV) which is movable between:
- a vertical and longitudinal orientation position in which, in cooperation with said fixed front seat element (CAV), it belongs to said front side seat (PLAV);
- and a vertical and transverse orientation position in which, in cooperation with said fixed front seat element (CAV), it forms part of said front transverse seat (PTAV).

3. Vehicle (10) according to claim 1 or 2, **characterised in that** the rear side seat and the front side seat are adjacent to form a two-seater side bench seat (PLAR, PLAV) comprising said rear side seat (PLAR) and said front side seat (PLAV).

4. Vehicle according to claim 1, **characterised in that** the rear lower support structure (42) is movable between:
- a horizontal position of use in which the rear seat element (CAR) can rest on the upper face of a board;
- and a retracted position in which the rear seat element (CAR) extends in a vertical plane adjacent to said first side wall (PLG).

5. Vehicle (10) according to any of the preceding claims, **characterised in that** the table (T) is a table that can be converted between:
- a state allowing its simultaneous use by five seated persons (01-05);
- and another state in which its dimensions are reduced and its outline then comprises:
-- another first side edge (130G) arranged opposite said first (PLG) of the two side walls (PLG, PLD) of the rear part (14);
- another second side edge (130D) along which said longitudinal aisle (34) extends;
-- another front edge (132AV) which is arranged opposite the said front side seat converted into a front transverse seat (PTAV) which faces the rear of the vehicle;
-- and another rear edge (132AR) which is arranged opposite at least one rear transverse seating position (PTAD) which faces the front of the vehicle,
whereby at least two persons (O2', O1') can sit simultaneously at the table, occupying said at least one rear transverse seating position (PTAD) and said front transverse seating position (PTAV).

6. Vehicle (10) according to claim 5, **characterised in that** when the convertible table (T) is in said other state in which its dimensions are reduced, three persons (O1'-O3') can sit simultaneously at the table, occupying two adjacent rear transverse seating positions (PTAD, PTAG) arranged opposite said other rear edge (132AR) and said front transverse seating position (PTAV).

7. Vehicle (10) according to one of claims 1 to 6,
**characterised in that**:
- the table (T) has a rectangular outline with:
-- a first long side edge (30G), oriented longitudinally, arranged opposite a first (PLG) of the two side walls (PLG, PLD) of the rear part (14) with which (PLG) this first long edge (30G) delimits a lateral space in which a front lateral seat (PLAV) and a rear lateral seat (PLAR) adjacent to said first long edge (30G) are arranged;
-- a second long side edge (30D) opposite the first long side edge (30G), with a longitudinal orientation, along which (30D) a longitudinal aisle (34) extends;
-- a short front edge (32AV) oriented transversely, which is arranged opposite the two front seats (SAG, SAD) in a pivoted position;
-- and a short rear edge (32AR) oriented transversely, which is arranged opposite at least one rear transverse seat (PTAD) that faces the front of the vehicle.

8. Vehicle (10) according to claim 7 taken in combination with one of claims 5 or 6, **characterised in that** in said other state of the convertible table (T) in which its dimensions are reduced, its rectangular outline then comprises:
-- another first edge (130G), oriented longitudinally, arranged along said first (PLG) of the two side walls (PLG, PLD) of the rear part (14);
-- another second edge (130D), oriented longitudinally, along which (130D) said longitudinal passageway (34) extends;
-- another front edge (132AV) with a transverse orientation, which is arranged opposite the said front side seat converted into a front transverse seat (PTAV) which faces the rear of the vehicle;
-- and another rear edge (132AR) with a transverse orientation, which is arranged opposite at least one rear transverse seat (PTAD, PTAG) that faces the front of the vehicle.

9. Vehicle (10) according to claim 8, **characterised in that** when the convertible table (T) is in said other state in which its dimensions are reduced, three people (O1'-O3') can sit simultaneously at the table, occupying two adjacent rear transverse seats (PTAG, PTAD) arranged opposite said other rear transverse edge (132AR) and said front transverse seat (PTAV).

10. Vehicle (10) according to any of the preceding claims, **characterised in that** the table (T) comprises a table leg (PT) and a rectangular tabletop consisting of two halves (M1, M2), of which:
- a first half (M1) which is supported by the upper end of the table leg (PT) and which is mounted so as to be movable in the horizontal plane relative to this upper end;
- a second half (M2) which is mounted so as to be movable relative to the first half (M1) between:
-- an extended position in which the two halves (M1, M2) form a large tabletop allowing five people (01-05) to sit at the table simultaneously;
-- and a folded position in which the two halves (M1, M2) are folded one onto the other and form a smaller tabletop.

11. Vehicle (10) according to the previous claim, **characterised in that** said first half (M1) of the tabletop is mounted so as to be movable transversely in the horizontal plane relative to the upper end of the table leg (PT) between a position adjacent to said first side wall (PLG) and a position remote from said first side wall (PLG), and is mounted pivotally in the horizontal plane relative to the upper end of the table leg (PT) between two distinct angular positions offset by a quarter turn.

12. Vehicle (10) according to one of claims 10 or 11, **characterised in that** the second half (M2) of the tray is mounted hinged relative to the first half (M1) about a horizontal hinge axis.

13. Vehicle (10) according to any of the preceding claims, **characterised in that** said at least one rear transverse seat (PTAG, PTAD) belongs to a rear transverse bench seat (BTA) comprising two rear transverse seats (PTAG, PTAD) which faces the front of the vehicle and extends from said first side wall (PLG).
